Europäisches Patentamt

European Patent Office

Office européen des brevets

(11) Veröffentlichungsnummer: **0 161 712**
**A2**

(12) **EUROPÄISCHE PATENTANMELDUNG**

(21) Anmeldenummer: **85200691.5**

(22) Anmeldetag: **02.05.85**

(51) Int. Cl.⁴: **H 02 K 5/132**

(30) Priorität: **14.05.84 DE 3417808**

(43) Veröffentlichungstag der Anmeldung: **21.11.85**
**Patentblatt 85/47**

(84) Benannte Vertragsstaaten: **DE FR GB**

(71) Anmelder: **Philips Patentverwaltung GmbH,
Billstrasse 80, D-2000 Hamburg 28 (DE)**

(84) Benannte Vertragsstaaten: **DE**

(71) Anmelder: **N.V. Philips' Gloeilampenfabrieken,
Groenewoudseweg 1, NL-5621 BA Eindhoven (NL)**

(84) Benannte Vertragsstaaten: **FR GB**

(72) Erfinder: **Bertram, Leo, Am Sender 10, D-5190 Stolberg
(DE)**
Erfinder: **Knops, Alwin, Corsostraat 5,
B-4728 Hergenrath (BE)**
Erfinder: **Oepen, Heinrich, Wenauer Strasse 5,
D-5190 Stolberg (DE)**

(74) Vertreter: **Kupfermann, Fritz-Joachim et al, Philips
Patentverwaltung GmbH
Billstrasse 80 Postfach 10 51 49,
D-2000 Hamburg 28 (DE)**

(54) **Druckpumpe mit einem Nassläuferantriebsmotor.**

(57) Die Erfindung bezieht sich auf eine Druckpumpe (2) mit einem Antriebsmotor (1), dessen Rotor (10) und Lagerungen (12, 13) in einem mit Pumpflüssigkeit gefüllten Naßraum (22) betrieben werden und dessen Stator (14) von dem Naßraum (22) durch einen Spaltrohrtopf (3) getrennt ist. Der Spaltrohrtopf (3) bildet das zentrale, Druckpumpe (2) und Motor (1) verbindende Bauteil. Der Motor ist als Einphasensynchronmotor mit permanentmagnetischem Rotor (10) ausgebildet. Der Stator (14) ist als Steckbauteil auf den Spaltrohrtopf (3) aufgesteckt, wobei die Polschuhe (18) des Stators (14) den Spaltrohrtopf (3) derart umschließen, daß sich der Stator (14) über seine Statorpolschuhe (18) am Spaltrohrtopf (32) von selbst festhält.

Druckpumpe mit einem Naßläuferantriebsmotor


Die Erfindung bezieht sich auf eine Druckpumpe mit einem Antriebsmotor, dessen Rotor und Lagerung in einem mit Pumpflüssigkeit gefüllten Naßraum betrieben werden und dessen Stator von dem Naßraum durch einen Spaltrohrtopf getrennt ist.

Eine derartige Druckpumpe ist aus der DE-OS 31 05 428 bekannt. An das Pumpengehäuse ist dabei ein Spaltpolmotor angeflanscht, dessen Welle ein Pumpenrad trägt. Das Pumpenrad läuft bei anmontiertem Spaltpolmotor in dem Pumpengehäuse um. Der Naßteil des Motors ist mittels eines Spaltrohrtopfes von dem trockenen Motorteil getrennt. Die Lagerungen der Motorwelle befinden sich innerhalb des Spaltrohrtopfes.

Spaltpolmotoren sind hinsichtlich der Größe ihres Luftspaltes außerordentlich empfindlich. Deshalb muß der Spaltrohrtopf im Feldbereich zwischen Stator und Rotor dünnwandig sein. Dies ist problematisch und macht den Spaltrohrtopf zu einem anfälligen Gebilde, das an seinen Enden gut und sauber geführt gelagert sein muß. Zwischen dem offenen und dem geschlossenen Topfende darf der Spaltrohrtopf nicht wesentlich belastet werden. Damit wird die Konstruktion der Pumpenmotoreinheit sehr kompliziert und großbauend.

Es ist Aufgabe der Erfindung, eine Druckpumpe mit einem Antriebsmotor der eingangs erwähnten Art zu schaffen, die einfach und kleinbauend ausgebildet ist, so daß sie in der Lage ist, beispielsweise an eine Farbfernseh-Projektionsröhre seitlich angeflanscht zu werden. Weiterhin besteht in diesem Fall sogar noch die Forderung, daß die Pumpe unabhängig von Netzspannungs- und Lastschwankungen arbeiten soll, um zur Vermeidung von Schlierenbildungen eine laminare Strömung aufrecht zu erhalten.

Die gestellte Aufgabe ist erfindungsgemäß dadurch gelöst, daß der Spaltrohrtopf das zentrale, Druckpumpe und Motor verbindende Bauteil ist, der Motor ein Einphasensynchronmotor mit permanentmagnetischem Rotor ist und der Stator als Steckbauteil auf den Spaltrohrtopf aufgesteckt ist, wobei die Polschuhe des Stators den Spaltrohrtopf derart umschließen, daß sich der Stator über seine Statorpolschuhe am Spaltrohrtopf von selbst festhält.

Ein Einphasensynchronmotor ist hinsichtlich der Spaltbreite nicht sehr kritisch. Es ist deshalb ohne weiteres möglich, dem Spaltrohrtopf einen solchen Materialquerschnitt zu geben, daß er das zentrale, Druckpumpe und Motor verbindende Bauteil ist. Der Stator kann dann ohne Schwierigkeiten nachträglich auf den Spaltrohrtopf aufgeschoben werden. Da der Einphasensynchronmotor netz- und lastschwankungsunabhängig arbeitet, ist er am besten geeignet, eine laminare Strömung aufrecht zu erhalten, mit der Schlierenbildungen auf dem Bildschirm von Farbfernseh-Projektionsröhren vermieden werden. Durch diese Kühlung mittels einer laminaren Strömung wird bei Farbfernseh-Projektionsröhren erreicht, daß die im Bereich des Bildschirmes anfallenden größeren Wärmemengen durch erzwungene Konvektion abgeführt werden. Damit tritt keine zu starke

0 161 712

thermische Belastung auf, die eine Zerstörung der Phosphorschicht zur Folge haben könnte.

Der permanentmagnetische Rotor ist im Spaltrohrtopf nicht korrosionsgefährdet. Das permanentmagnetische Material braucht also im Spaltrohrtopf nicht gegenüber dem Kühlwasser besonders isoliert zu werden.

Nach einer weiteren Ausgestaltung der Erfindung ist vorgesehen, daß der Stator gegenüber dem Spaltrohrtopf in eine gewünschte Stellung drehbar ist. Hieraus folgt der weitere Vorteil, daß der Stator in eine für die Konstruktion günstige Richtung gedreht werden kann, ohne daß dies irgendeinen negativen Einfluß auf die Motorkonstruktion hat.

Nach einer weiteren Ausgestaltung der Erfindung ist vorgesehen, daß sie als steckbare Komponente, insbesondere für den Kühlmittelumlauf einer Farbfernseh-Kathodenstrahlröhre einsetzbar ist. Das geringe Leistungsgewicht des Motors macht es möglich, ihn und/oder die ganze Pumpe als Steckkomponente einzusetzen.

Die Erfindung wird anhand des in der Zeichnung dargestellten Ausführungsbeispieles näher erläutert. Es zeigen:

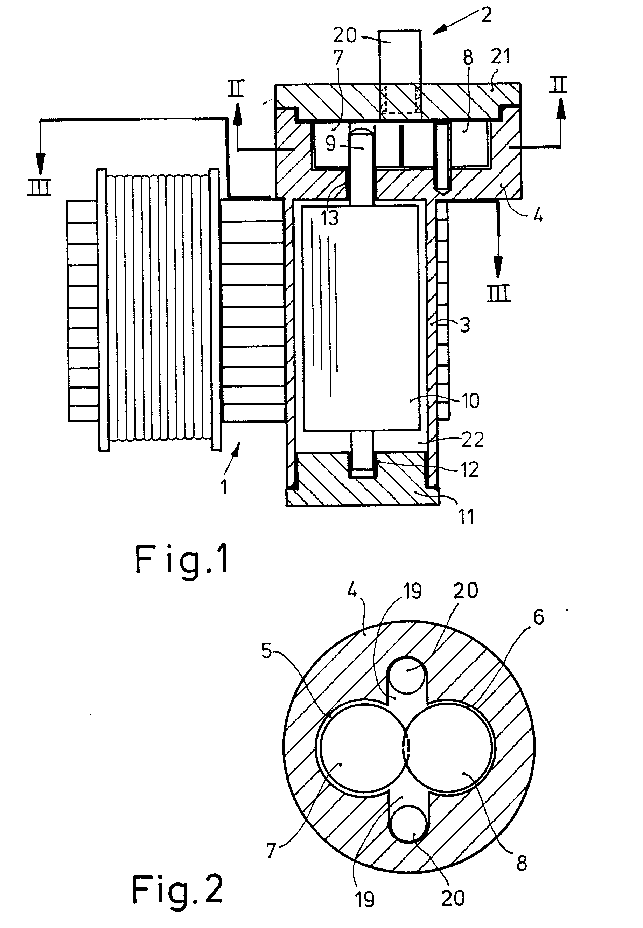

Fig. 1 eine Druckpumpe mit einem als Antriebsmotor dienenden zweipoligen Einphasensynchronmotor,

Fig. 2 einen Schnitt durch die Druckpumpe längs der Linie II-II in Fig. 1,

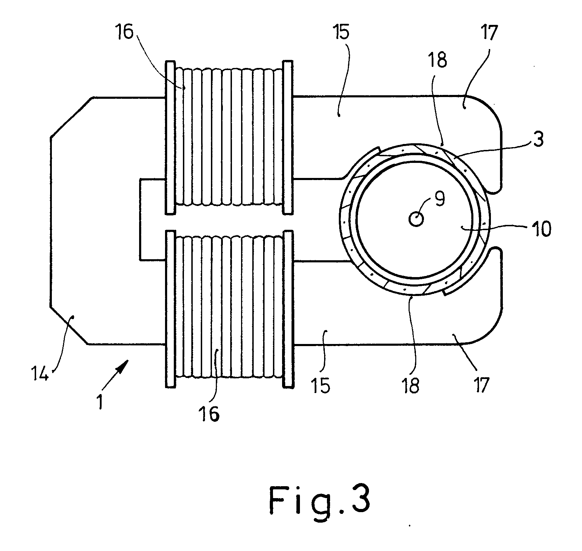

Fig. 3 eine Draufsicht auf den Einphasensynchronmotor, dessen Stator auf einen Spaltrohrtopf aufgeklemmt ist, längs der Linie III-III nach Fig. 1.

Die Druckpumpe mit Naßläuferantriebsmotor besteht aus einem Einphasensynchronmotor 1, der mit einer Druckpumpe 2 zusammengebaut ist zu einer Motorpumpeneinheit. Das zentrale Teil dieser Motorpumpeneinheit ist ein Spaltrohrtopf 3, der Bestandteil des Pumpengehäuses 4 ist. Im Pumpengehäuse sind Hohlräume 5, 6 für miteinander kämmende Pumpenzahnräder 7, 8 vorgesehen. Die Achse 9 des Antriebszahnrades 7 der Zahnradpumpe 2 ist zugleich die Achse des permanentmagnetischen Rotors 10 des Einphasensynchronmotors 1. Der Spaltrohrtopf 3 ist an seinem von dem Pumpengehäuse 4 abliegenden Ende mit einem Abschlußdeckel 11 geschlossen. Der Abschlußdeckel 11 enthält ein Lager 12 für die Rotorwelle 9. Das zweite Rotorlager 13 befindet sich im Gehäuse 4 zwischen dem Antriebszahnrad 7 und dem permanentmagnetischen Rotor 10.

Der Einphasensynchronmotor 1 besteht aus einem U-förmig gebogenen Stator 14 mit Eisenschenkeln 15. Auf die Eisenschenkel 15 sind Erregerspulen 16 aufgeschoben. An den freien Enden 17 der Eisenschenkel 15 sind Polschuhe 18 ausgebildet, die den Spaltrohrtopf 3 dichtend so fest umschließen, daß sich das Statoreisen 14 am Spaltrohrtopf 3 selbst festklemmt. Auf diese Weise ist der Stator 14 auch auf dem Spaltrohrtopf 3 verdrehbar, ohne daß sich dadurch die Motorfunktion verändert.

Durch die gegenläufige Bewegung der Zahnräder 7 und 8 erfolgt auf bekannte Weise innerhalb der Pumpkammer 5, 6 der Transport des zu fördernden Mediums, beispielsweise Wasser. Das Wasser wird je nach der Drehrichtung der Zahnräder 7, 8 durch einen der Kanäle 19 in den jeweiligen Pumpstutzen 20 gedrückt, wobei die Pumpe entweder als Saug- oder Druckpumpe arbeitet.

PH~ ~~-~~~ ~~

0 161 712

Die Pumpkammer 5, 6 wird vom Pumpengehäuse 4 und einem
Pumpendeckel 21 gebildet.

Während des Betriebes kann durch das Lager 13 Pumpflüssigkeit in den Naßraum 22 innerhalb des Spaltrohrtopfes 3
eindringen. Diese Flüssigkeit stört den Motorbetrieb
nicht. Da das Wasser in dem Innenraum 22 keinen Schaden
anrichtet und mithin eindringen kann, braucht das Lager 13
nicht wasserdichtend ausgebildet zu sein.

## PATENTANSPRÜCHE

1. Druckpumpe mit einem Antriebsmotor, dessen Rotor und Lagerung in einem mit Pumpflüssigkeit gefüllten Naßraum betrieben werden und dessen Stator von dem Naßraum durch einen Spaltrohrtopf getrennt ist, dadurch gekennzeichnet, daß

- der Spaltrohrtopf (3) das zentrale, Druckpumpe (2) und Motor (1) verbindende Bauteil ist,
- der Motor ein Einphasensynchronmotor mit permanentmagnetischem Rotor (10) ist,
- der Stator (14) als Steckbauteil auf den Spaltrohrtopf (3) aufgesteckt ist, wobei die Polschuhe (18) des Stators (14) den Spaltrohrtopf (3) derart umschließen, daß sich der Stator (14) über seine Statorpolschuhe (18) am Spaltrohrtopf (3) von selbst festhält.

2. Druckpumpe nach Anspruch 1, dadurch gekennzeichnet, daß der Stator gegenüber dem Spaltrohrtopf in eine gewünschte Stellung drehbar ist.

3. Druckpumpe nach Anspruch 1 und 2, dadurch gekennzeichnet, daß sie als steckbare Komponente, insbesondere für den Kühlmittelumlauf einer Farbfernseh-Kathodenstrahlröhre einsetzbar ist.

Fig.1

Fig.2

0 161 712

Fig.3